# EUROPEAN PATENT SPECIFICATION

(11) **EP 0 734 413 B1**
(45) Date of publication and mention of the grant of the patent: **10.03.1999**
(21) Application number: 94906445.5
(22) Date of filing: 16.12.1993
(51) Int. Cl.: C08K 5/03, C08K 3/22, C08K 3/24, C08L 77/00

(54) **FLAME RESISTANT AROMATIC POLYAMIDE RESIN COMPOSITION**
FLAMMHEMMENDE AROMATISCHE POLYAMIDHARZZUSAMMENSETZUNG
COMPOSITION IGNIFUGE DE RESINE POLYAMIDE AROMATIQUE

(43) Date of publication of application: 02.10.1996
(73) Proprietor: E.I. DU PONT DE NEMOURS AND COMPANY, Wilmington Delaware 19898 (US)
(72) Inventor: HAYASHI, Ryuichi, Tokyo 194 (JP); MATSUDA, Toyoharu, Kanagawa 245 (JP)
(74) Representative: Abitz, Walter, Dr.-Ing.
(86) International application number: US9312282
(87) International publication number: WO9516737

(56) References cited:
- EP-A- 0 410 301
- US-A- 4 137 212
- US-A- 4 360 455
- US-A- 5 258 439

## Description

### BACKGROUND OF THE INVENTION

Polyamide resins, which are excellent in mechanical properties, moldability, and chemical resistance, are used in a variety of fields, such as in automotive parts, electrical/electronic parts, mechanical parts, and the like. In particular, applications in electrical/electronic parts strongly require good soldering and flame resistance. The UL specification is extensively used for defining flame resistance and the product must be V-0 equivalent. In order to obtain a molded article having high soldering resistance, the use of a high melting nylon, such as an aromatic nylon and a 4,6-nylon, having a heat resistance of at least 280°C has been considered. High melting aromatic polyamide resin compositions with flame resistance have also been developed. For example, a flame resistant aromatic polyamide resin obtained by incorporating brominated polystyrene and an antimony compound into the aromatic polyamide resin is extensively known as a resin composition that has excellent heat stability and excellent moldability (see EP-A-0 410 301).

However, a flame-resistant aromatic polyamide resin composition merely containing a conventional brominated polystyrene has, due to its high melt molding temperature, tended to cause the flame retardant to decompose or to degrade. It further has a tendency for deteriorating moldability and may result in molded articles having poor appearance.

The present invention aims to provide a flame resistant aromatic polyamide resin composition having excellent heat stability, moldability, and work safety.

### DETAILED DESCRIPTION OF THE INVENTION

Resin temperature during processing is determined by a variety of factors, such as the melt viscosity of the starting material, the screw shear force, the barrel temperatures, and the like. Minimizing the adverse effects of these factors which determine the process temperature will permit mixing and molding at lower temperatures, thereby suppressing resin degradation, along with decomposition or discoloration of the flame retardant that can occur upon exposure to high temperature conditions. From among these factors, it was found that the viscosity of the flame retardant is a very important factor. The present inventors have found that a high quality flame resistant aromatic polyamide resin composition can be prepared without incurring much shear force (that is, without causing processing temperature to rise significantly) through use of a low viscosity flame retardant.

As examples for demonstrating the above means, use was made of highly flowable dibromopolystyrenes (Great Lakes Company's PDBS80 and PDBS10). These dibromopolystyrenes had rather lower viscosities, under the conditions given below, when compared to the more extensively and commonly used tribromopolystyrene (Nissan Fero Company, Pyrocheck 68PB) under the same conditions (EP-A-0 410 301).

| VISCOSITIES OF FLAME RETARDANTS (Shear Rate 100 sec⁻¹, Unit: Pasec) | | | |
|---|---|---|---|
| Measurement Temperature | PDBS80 | PDBS10 | Pyrocheck 68PB |
| 250°C | 300 | 50 | 1000> |
| 280°C | 90 | 10> | 200 |
| 320°C | 20 | 1 | 90 |

As such, the present invention is a flame resistant aromatic polyamide resin composition comprising
(A) 100 parts by weight of an aromatic polyamide resin having a melting point in the range of 280°C to 340°C;
(B) 10-100 parts by weight of a brominated polystyrene having a viscosity of not more than 800 pascal seconds, as measured at a temperature of 250°C and a shear rate of 100 sec⁻¹; and
(C) 0.5-40 parts by weight of antimony oxide and/or sodium antimonate.

The aromatic polyamide resin component of this invention is comprised of (a) a dicarboxylic acid component, which is terephthalic acid, and/or an aromatic dicarboxylic acid component other than terephthalic acid and (b) a diamine component comprising an aliphatic and/or alicylic diamine component.

The dicarboxylic acid component may also be an aromatic dicarboxylic acid other than terephthalic acid alone. Aromatic dicarboxylic acid components other than terephthalic acid include, for example, isophthalic acid, phthalic acid, 2-methyl terephthalic acid, and the like. The dicarboxylic acid component which is preferably used in this invention is terephthalic acid or a mixture of terephthalic acid and isophthalic acid wherein there is not more than 40 mole % of isophthalic acid in the mixture.

The diamine component may be an aliphatic diamine component itself, an alicyclic diamino component itself, or a mixture of an aliphatic diamine component and alicyclic diamine component. The aliphatic diamine component is selected from linear or branched chain alkylene diamines containing 4-25 carbon atoms, preferably 6-8 carbon atoms and at least one alicyclic hydrocarbon ring. The diamine component which is preferably used in this invention is a mixture of hexamethylene diamine and 2-methylpentamethylene diamine containing at least 40 mole % of hexamethylene diamine in the mixture.

The brominated polystyrene, which is the flame retardant used in this invention, is a brominated polystyrene having the above-mentioned viscosity. It includes, for example, dibromopolystyrene (Great Lakes Company, PDBS80 and PDBS10). The resin viscosity is a value measured on a Toyo Seiki Capillograph 1B.

The amount of the flame retardant used in this invention is 10-100 parts by weight, preferably 15-75 parts by weight, per 100 parts by weight of the aromatic polyamide resin. If the brominated polystyrene in the composition is less than 10 parts by weight, the flame retardation effect is reduced, while a level exceeding 100 parts by weight may cause a problem in the mechanical strength of the articles molded from the composition.

The flame retardant coagents used in the present compositions are antimony oxide and/or sodium antimonate. The amount of coagent incorporated into the composition is 0.5-40 parts by weight, preferably 1-15 parts by weight, per 100 parts by weight of the aromatic polyamide resin. A level of flame retardant coagent less than 0.5 parts by weight reduces the flame retardation effect, while a level greater than 40 parts by weight may cause a problem in the mechanical strength of articles molded from the composition. Antimony oxide includes, for example, antimony trioxide, antimony tetroxide antimony pentoxide, or the like. An antimony oxide may be used in combination with sodium antimonate. The preferred flame retardant coagent for this invention is sodium antimonate.

The aromatic polyamide resin used in this invention may contain up to 200 parts by weight of an inorganic reinforcing agent, depending upon the application of the molded article. Inorganic reinforcing agents include glass fibers, carbon fibers, potassium titanate whiskers, talc, mica, and the like. Glass fibers are the most preferred.

Within the range of not adversely affecting the properties thereof, the aromatic polyamide resin compositions of this invention may contain, in addition to the above components, additives, such as heat stabilizers, plasticizers, antioxidants, nucleating agents, dyes, pigments, mold release agents, and the like.

### EXAMPLES

The present invention is now specifically described by the examples below, which in no way limit the scope of the present invention.

In the Examples below, the following terminology is used:

6T: [-NH-(CH₂)₆-NH-CO-p-Ph-CO-)ₙ

6I: [-NH-(CH₂)₆-NH-CO-m-Ph-CO-]ₙ

2MPT: [-NH-CH₂-C(CH₃)H-(CH₂)₃-NH-CO-p-Ph-CO]ₙ

wherein T is a terephthalic acid; I is isophthalic acid; p-Ph is p-phenylene; m-Ph is m-phenylene; 6 is hexamethylene diamine; and 2MP is 2-methylpentamethylene diamine.

### Example

A polyamide copolymer of 6T, 6I and 2MPT at a ratio of 45:5:50 or a polyamide copolymer of 6T and 2MPT at a ratio of 50:50, polydibromostyrene (Great Lakes Company, PDBS80 and PDBS10), sodium antimonate (Nissan Kagaku Sunepock NA1070L), antimony pentoxide (Nissan Kagaku, Sunepock NA1030), antimony trioxide (Campine Company, White Star N), antimony tetroxide (Nissan Kagaku, Sunepock NA5050), and microglass chopped strands (Nippon Itagarasu Company, TP64) were mixed in the parts by weight given in Table 1 below. The components listed in Table 1 were compounded in a twin screw extruder (Toshiba TEM35).

### Control Example

A polyamide copolymer of 6T, 6I, and 2MPT at a ratio of 45:5:50 or a polyamide copolymer of 6T and 2MPT at 50:50, polytribromostyrene (Nissan Fero Company, Pyrocheck 68PB), sodium antimonate (Nissan Kagaku, Sunepock NA1070L), antimony pentoxide (Nissan Kagaku, Sunepock NA1030), antimony trioxide (Campine Company, White Star N), antimony tetroxide (Nissan Kagaku, Sunepock NA5050), and microglass chopped strands (Nippon Itagarasu Company, TP64), were mixed at the weight parts given in Table 1 and production was carried out in a manner similar to the above example.

**TABLE**

| COMPOUND COMPOSITION OF EXAMPLES AND CONTROL EXAMPLES | |
|---|---|
| PA-1 | 6T/6I/2MPT = 45/5/50 |
| PA-2 | 6T/2MPT = 50/50 |
| FR-1 | Polydibromostyrene (Great Lakes Company, PDBS80) |
| FR-2 | Polydibromostyrene (Great Lakes Company, PDBS10) |
| FR-3 | Polytribromostyrene (Nissan Fero Company, Pyrocheck 68PB) |
| Sy-1 | Sodium antimonate (Nissan Kagaku K.K., Sunepock NA1070L) |
| Sy-2 | Antimony pentoxide (Nissan Kagaku K.K., Sunepock NA1030) |
| Sy-3 | Antimony trioxide (Campine Company, White Star N) |
| Sy-4 | Antimony tetroxide (Nissan Kagaku K.D., Sunepock NA5050) |
| GR | Microglass chopped strands (Nippon Itagarasu Company, TP64) |

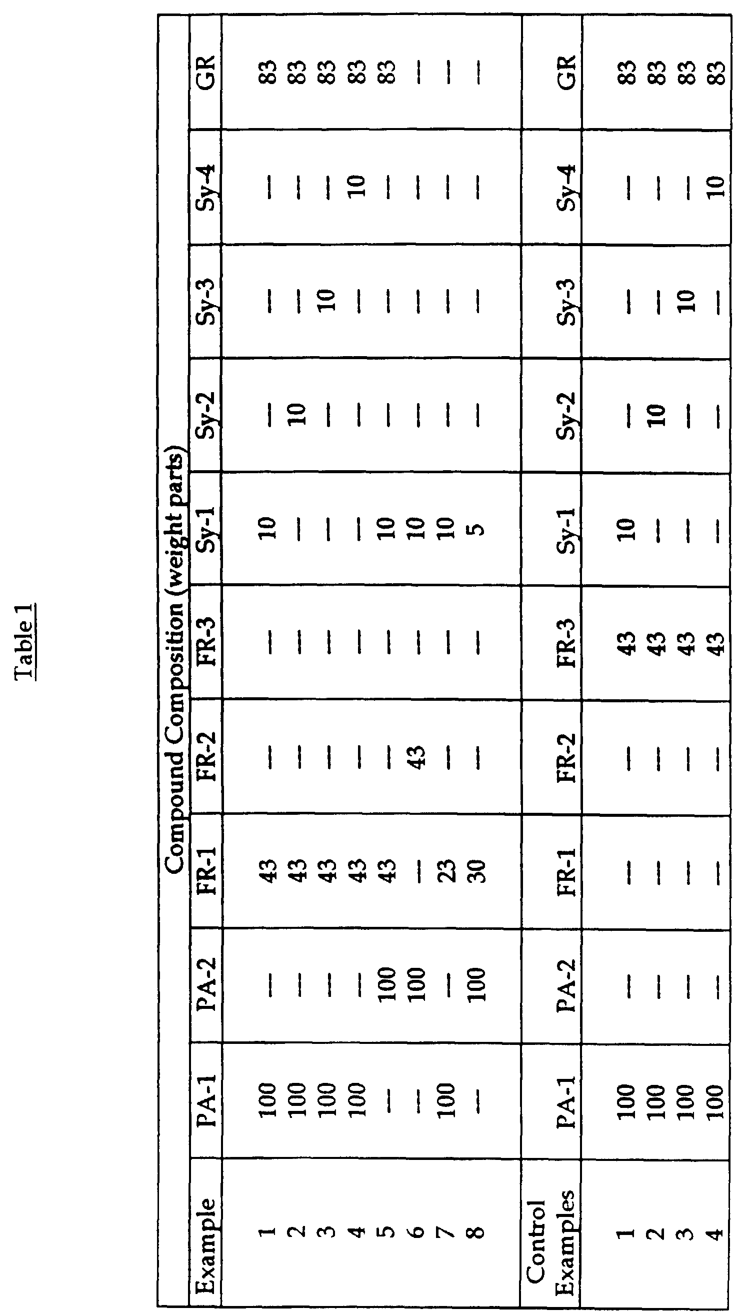

### RESULTS OF PRODUCTION AND HEAT STABILITY EVALUATION

A comparative evaluation of viscosity at high temperatures was made for the above control compositions containing tribrominated polystyrene and the above example compositions containing low viscosity brominated polystyrene. Resin pellets of the compositions in Table 1 in an extruder (barrel temperature setting of 320°C; screw revolutions = 200 rpm) were produced so as to evaluate the results of the production and the heat stability of the resin pellets. Table 2 gives the evaluation results of the examples of this invention and the comparative examples based on these methods of evaluation.

In Table 2, the terms used are described below.

"Torque Current" was the load imposed on the extruder screw. It is expressed in terms of motor current consumed (A).

"State of Extrusion" was rated "poor", based on the difficulty of pulling resin strands, on any resin decomposition at high temperatures, on gas formation, and the like, in regard to problems in pellet productivity and work safety. A rating of "satisfactory" was given if no problems occurred in these aspects.

"Change in Melt Viscosity" was the change with time of melt resin viscosity, as measured by a Toyo Seiki Company's Capillograph 1B at a shear rate of 100 sec⁻¹ and a resin temperature of 340°C. The basis for rating was as follows: "A" - change in melt viscosity when held at 2 minutes is less than 10 pascal seconds; "B" - for the change to be at least 10 pascal seconds, but less than 20 pascal seconds; "C" - for the change of 20 pascal seconds or more; "D" - for vigorous degradation making measurement impossible.

"Weight Change at High Temperature" was measured on a DuPont Instrument Thermal Analyzer 2,000 and TGA2950. A sample was heated at a rate of 10°C/min to 350°C. The time when the temperature reached 350°C was t₀ and the time five minutes after being held at 350°C was t₅. The weight loss on heating for times t₀ and t₅ was then expressed. The basis for evaluation was as follows: "A" - for a loss of weight at t₅ of not more than 10%; "B" - for not more than 20%; "C" - for not more than 20%, and "D" - for exceeding 20%.

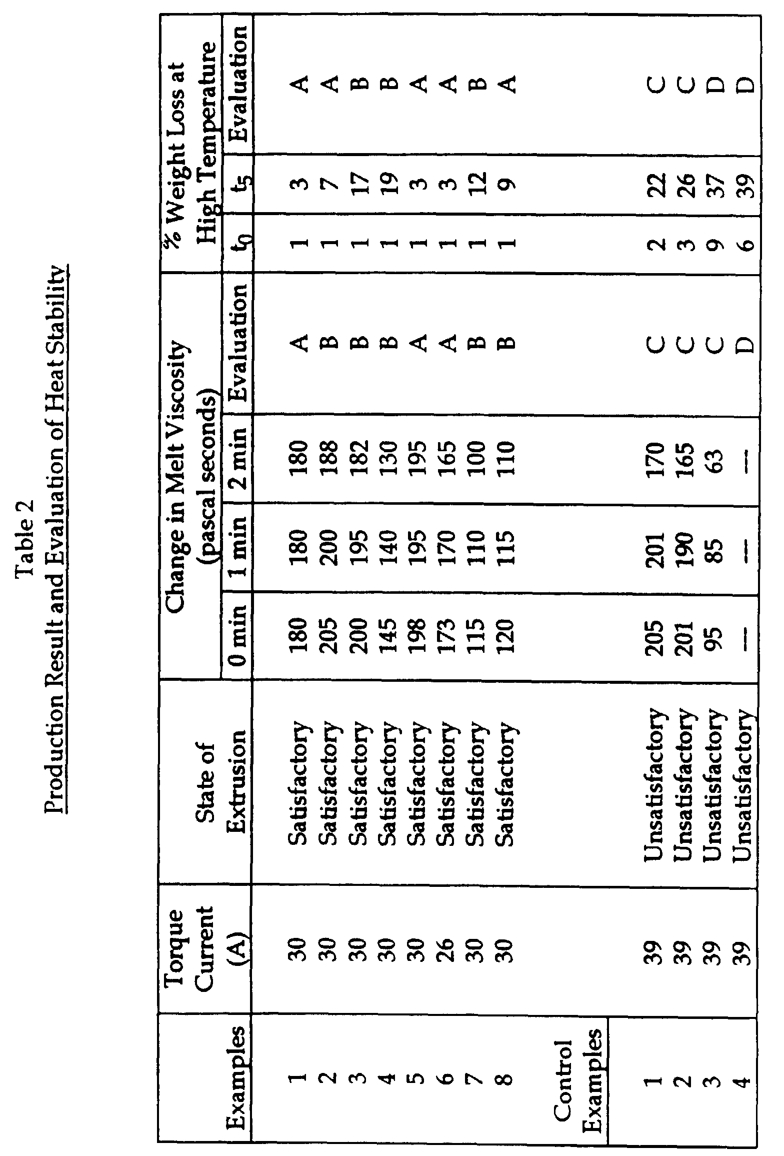

### COMBUSTION AND MOLDABILITY EVALUATION

The pellets prepared above were injected molded in an injection molding machine (Toshiba 170F111-5A) to obtain a 0.08 cm (1/32 inch) thick UL-94 combustion test piece. The combustion test on the above test piece was carried out according to the UL Specification Regulation, described below.

### UL Specification Regulation

The top end of the test piece was held by a clamp to set the test piece vertically. A defined flame was allowed to make contact with the bottom end of the test piece for 10 seconds and then the flame was kept away from the sample to measure the duration of combustion (from the first ignition of the test piece). When burning extinguished, the flame was immediately allowed to come into contact with the bottom end of the test piece for 10 seconds to measure the combustion time (second ignition) of the test piece. The same measurement was repeated for five test pieces five times each for the first ignition combustion time and second ignition combustion time with a total of 10 data points. The total of the 10 data points is designated S. The largest value among the 10 data points is called M.

A rating V-0 equivalent was given if S was not more than 50 seconds and M was not more than 10 seconds, with no continued burning reaching the clamp, nor was there any dropping of the flame melt, causing ignition of cotton placed 30 cm (12 inches) below the sample. A rating of V-2 equivalent was given if S was not greater than 250 seconds and M was not greater than 30 seconds, where the flame melt dropped to cause the ignition of cotton located 30 cm (12 inches) below the sample. Results are provided in Table 3, below.

### Moldability Evaluation

Moldability was rated "poor" if there were problems with productivity of the molded articles and work safety, such as resin decomposition, gas formation, burr formation, poor appearance of molded articles, and the like. Those compositions without any problems were rated "satisfactory".

Table 3 provides the results of the moldability evaluation.

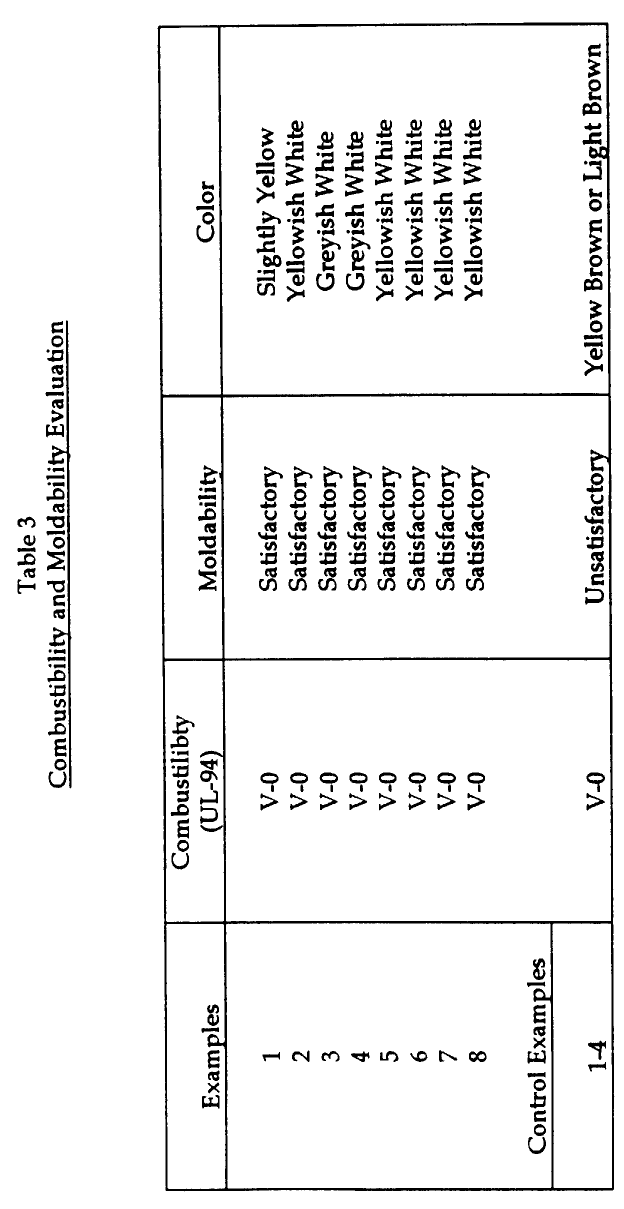

The above examples clearly show that using a specific flame retardant as given in the scope of the present invention for making aromatic polyamide resin compositions flame resistant can provide a flame resistant polyamide resin composition with excellent heat stability, moldability, and work stability.

## Claims

1. A flame resistant aromatic polyamide resin composition comprising
(A) 100 parts by weight of an aromatic polyamide resin having a melting point in the range of 280°C-340°C;
(B) 10-100 parts by weight, based upon 100 parts by weight of component (A), of a brominated polystyrene having a viscosity of not more than 800 pascal seconds, as measured at a temperature of 250°C and a shear rate of 100 sec⁻¹; and
(C) 0.5-40 parts by weight, based upon 100 parts by weight of component (A), of antimony oxide and/or sodium antimonate.

2. The composition of Claim 1 further containing at least one compound selected from the group consisting of inorganic reinforcing agents, heat stabilizers, plasticizers, antioxidants, nucleating agents, dyes, pigments, and mold release agents.

3. The composition of Claim 2 wherein the inorganic reinforcing agent is selected from the group consisting of glass fibers, carbon fibers, potassium titanate whiskers, talc, and mica.

## Patentansprüche

1. Flammbeständige aromatische Polyamidharzzusammensetzung, umfassend
(A) 100 Gew.-Teile eines aromatischen Polyamidharzes mit einem Schmelzpunkt im Bereich von 280°C bis 340°C;
(B) 10 bis 100 Gew.-Teile, bezogen auf 100 Gew.-Teile der Komponente (A), eines bromierten Polystyrols mit einer Viskosität von nicht mehr als 800 Pascal-Sekunden, gemessen bei einer Temperatur von 250°C und einer Scherrate von 100 sec⁻¹; und
(C) 0,5 bis 40 Gew.-Teile, bezogen auf 100 Gew.-Teile der Komponente (A), Antimonoxid und/oder Natriumantimonat.

2. Zusammensetzung nach Anspruch 1, welche darüber hinaus wenigstens einen Stoff enthält, ausgewählt aus der Gruppe bestehend aus anorganischen Verstärkungsmitteln, Wärmestabilisatoren, Plastifizierungsmitteln, Antioxidantien, Keimbildungsmitteln, Farbstoffen, Pigmenten und Formfreisetzungsmitteln.

3. Zusammensetzung nach Anspruch 2, bei welcher das anorganische Verstärkungsmittel ausgewählt ist aus der Gruppe bestehend aus Glasfasern, Kohlefasern, Kaliumtitanatwhiskern, Talk und Glimmer.

## Revendications

1. Composition de résine polyamide aromatique résistante à la flamme comprenant
(A) 100 parties en poids d'une résine polyamide aromatique avec un point de fusion dans le domaine compris entre 280°C et 340°C:
(B) 10 à 100 parties en poids, sur la base de 100 parties en poids du composant (A), d'un polystyrène bromé avec une viscosité ne dépassant pas 800 Pascal·secondes, lorsqu'elle est mesurée à une température de 250°C et avec un taux de cisaillement de 100 sec⁻¹; et
(C) 0.5 à 40 parties en poids, sur la base de 100 parties en poids du composant (A), d'un oxyde d'antimoine et/ou de l'antimoniate de sodium.

2. Composition de la revendication 1 contenant en outre au moins un composé choisi parmi le groupe constitué d'agents de renforcement minéraux, de stabilisateurs thermiques, de plastifiants, d'antioxydants, d'agents de nucléation, de colorants, de pigments et d'agents de démoulage.

3. Composition de la revendication 2 dans laquelle l'agent de renforcement minéral est choisi parmi le groupe constitué de fibres de verre, de fibres de carbone, de barbes de titanate de potassium, de talc et de mica.
